# EUROPÄISCHE PATENTSCHRIFT

(11) **EP 2 108 479 B1**
(45) Veröffentlichungstag und Bekanntmachung des Hinweises auf die Patenterteilung: **18.05.2011**
(21) Anmeldenummer: 09004641.8
(22) Anmeldetag: 31.03.2009
(51) Int. Cl.: B23Q 7/04, B23Q 39/02

(54) **Werkzeugmaschine sowie Verfahren zum Be- und Entladen von Werkstücken in einer solchen Werkzeugmaschine**
Machine tool and method for loading and unloading workpieces in such a machine tool
Machine-outil et procédé de chargement et de déchargement de pièces à usiner dans une telle machine-outil

(30) Priorität: 11.04.2008 DE 102008019521
(43) Veröffentlichungstag der Anmeldung: 14.10.2009
(73) Patentinhaber: Lang, Rudi M., 71277 Rutesheim (DE)
(72) Erfinder: Lang, Rudi M., 71277 Rutesheim (DE)
(74) Vertreter: Jackisch-Kohl, Anna-Katharina

(56) Entgegenhaltungen:
- EP-A- 1 369 198
- EP-A- 1 752 241
- WO-A-2004/065061
- DE-A1- 10 358 681

## Beschreibung

Die Erfindung betrifft eine Werkzeugmaschine nach dem Oberbegriff des Anspruches 1 sowie ein Verfahren zum Be- und Entladen von Werkstücken in einer solchen Werkzeugmaschine nach dem Oberbegriff des Anspruches 7.

Es sind Werkzeugmaschinen bekannt, auf deren Maschinenbett eine Spanneinrichtung als Bearbeitungsstation angeordnet ist, in der Werkstücke bearbeitet werden. Die eingesetzten Werkzeuge sind Teil von Revolverköpfen, die an den Bearbeitungseinheiten gelagert sind. Ist das Werkstück bearbeitet, wird es mit der Greifereinheit aufgenommen und abtransportiert, während mit einer anderen Greifereinheit das nächste zu bearbeitende Werkstück in die freigewordene Spanneinrichtung eingesetzt wird. Für die einzelnen Greifereinheiten sind eigene Halterungen und Antriebe notwendig, wodurch eine solche Werkzeugmaschine teuer in der Herstellung und der Anschaffung ist.

Es ist auch bekannt, die Greifereinheiten direkt im Werkzeugrevolver unterzubringen (EP-A-1 369 198). Dadurch wird zwar eine eigene Halterung für die Greifereinheiten eingespart, jedoch kann die Bearbeitung des Werkstückes erst dann beginnen, wenn es aus dem Revolverkopf entfernt und in die Spanneinrichtung eingesetzt ist.

Der Erfindung liegt die Aufgabe zugrunde, die gattungsgemäße Werkzeugmaschine und das gattungsgemäße Verfahren so auszubilden, dass die Werkzeugmaschine bei konstruktiv einfacher Ausbildung einen einfachen Transport der Werkstücke ermöglicht, wobei die Stillstandzeiten während des Werkstückwechsels gering gehalten werden.

Diese Aufgabe wird bei der gattungsgemäßen Werkzeugmaschine erfindungsgemäß mit den Merkmalen des Anspruches 1 und beim gattungsgemäßen Verfahren erfindungsgemäß mit den , Merkmalen des Anspruches 7 gelöst.

Bei der erfindungsgemäßen Werkzeugmaschine ist die Greifereinheit an dem das Werkzeug bzw. die Werkzeugspindel tragenden Schlitten vorgesehen. Ist für die Werkzeugspindel vorteilhaft ein Werkzeugrevolver vorgesehen, dann kann der Werkzeugrevolver unabhängig von der Greifereinheit betätigt werden. Es ist dadurch möglich, bereits beim Transport des Werkstückes den Werkzeugrevolver so zu drehen, dass das Werkstück, sobald es in die Spanneinrichtung eingesetzt ist, sofort bearbeitet werden kann. Für die Greifereinheit ist keine zusätzliche Halterung notwendig, da der Schlitten zur Lagerung des Werkzeugrevolvers ohnehin vorgesehen ist.

Beim erfindungsgemäßen Verfahren wird etwa zeitparallel das in der Spanneinrichtung liegende, bereits bearbeitete Werkstück von der einen Bearbeitungseinheit aufgenommen und abtransportiert, während das nächste zu bearbeitende Werkstück von der anderen Bearbeitungseinheit an die Spanneinrichtung herangeführt wird. Während die eine Bearbeitungseinheit das bearbeitete Werkstück ablegt, kann mit der anderen Bearbeitungseinheit bereits das nächste Werkstück in die Spanneinrichtung eingesetzt werden. Dadurch wird der Zeitraum zwischen der Bearbeitung aufeinanderfolgender Werkstücke sehr klein gehalten. Die Greifereinheit wird ausschließlich durch Verfahren der Schlitten in Richtung der Schlittenachsen in ihre Übernahme- und Abgabestellung verstellt.

Weitere Merkmale der Erfindung ergeben sich aus den weiteren Ansprüchen, der Beschreibung und den Zeichnungen.

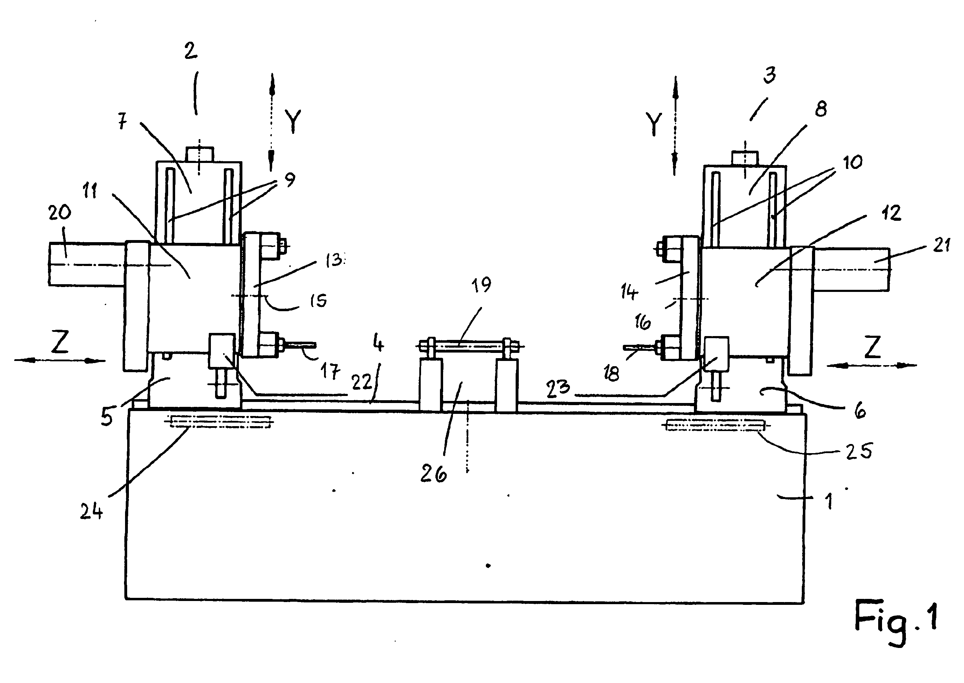

Die Erfindung wird anhand eines in den Zeichnungen dargestellten Ausführungsbeispieles näher erläutert. Es zeigen
- Fig. 1 bis Fig. 3: jeweils in schematischer Darstellung eine erfindungsgemäße Werkzeugmaschine, deren einander gegenüberliegende Bearbeitungseinheiten für einen Werkstückwechsel unterschiedliche Stellungen einnehmen.

Die Werkzeugmaschine hat ein Maschinenbett 1, auf dem zwei Bearbeitungseinheiten 2, 3 auf Führungen 4 verfahrbar sind. Die Führungen sind vorteilhaft Schienen, die sich in Z-Richtung erstrecken und auf denen die Bearbeitungseinheiten 2, 3 mit jeweils einem Schlitten 5, 6 in Z-Richtung verfahrbar sind. Vorteilhaft sind für die beiden Schlitten 5, 6 gemeinsame Führungen 4 vorgesehen. Es ist aber auch möglich, jedem Schlitten 5, 6 eine eigene Führung 4 zuzuordnen. Mit den Schlitten 5, 6 können die Bearbeitungseinheiten 2, 3 unabhängig voneinander in Z-Richtung verfahren werden.

Es ist auch möglich, bei getrennten Führungen 4 diese nicht fluchtend, sondern quer zu ihrer Längsrichtung versetzt zueinander auf dem Maschinenbett 1 anzuordnen. Je nach durchzuführender Bearbeitungsaufgabe können die Bearbeitungseinheiten 2, 3 auch relativ zueinander quer zur Z-Richtung versetzt angeordnet sein. Im dargestellten Ausführungsbeispiel sind die Bearbeitungseinheiten 2, 3 mittels ihrer Schlitten 5, 6 auf der gemeinsamen Führung 4 verfahrbar.

An jedem Schlitten 5, 6 ist ein aufrecht stehender Ständer 7, 8 vorgesehen, der jeweils mit einer Führung 9, 10 für einen weiteren Schlitten 11, 12 versehen ist. Die Führungen 9, 10 erstrecken sich in Y-Richtung und damit senkrecht zur Z-Richtung. Die beiden Schlitten 11, 12 können längs der vertikalen Führungen 9, 10 unabhängig voneinander und auch unabhängig von den Schlitten 5, 6 verfahren werden.

Die beiden Schlitten 11, 12 sind an ihren einander zugewandten Seiten jeweils mit wenigstens einer Werkzeugspindel versehen, in die ein Werkzeug zur Bearbeitung eines Werkstückes 19 aufgenommen werden kann. Sind am Werkstück 19 unterschiedliche Bearbeitungen vorzunehmen, werden die Werkzeugspindeln vorteilhaft durch jeweils einen Revolverkopf 13, 14 ersetzt, der um eine parallel zur Z-Richtung liegende Achse 15, 16 drehbar ist. Die Revolverköpfe 13, 14 tragen in bekannter Weise Werkzeuge 17, 18, mit denen die Werkstücke 19 bearbeitet werden. An den Schlitten 11, 12 sind Antriebe 20, 21 für die Revolverköpfe 13, 14 vorgesehen.

Um die Werkstücke 19 zu greifen, ist an jedem Schlitten 11, 12 jeweils eine Greifereinheit 22, 23 vorgesehen. Diese Greifereinheiten sind in bekannter Weise so ausgebildet, dass sie die Werkstücke 19 greifen können.

Im Zugriffsbereich der Greifereinheit 22 befindet sich wenigstens eine Transporteinrichtung 24, mit der die bearbeiteten Werkstücke 19 abtransportiert werden können. Im Zugriffsbereich der Greifereinheit 23 befindet sich wenigstens eine Transporteinrichtung 25, mit der zu bearbeitende Werkstücke 19 der Werkzeugmaschine zugeführt werden. Die Transporteinrichtungen 24, 25 können als Transportbänder, Transportketten und dergleichen ausgebildet sein.

Die Werkstücke 19 sind vorteilhaft Stangen, Rohre, Wellen und dergleichen, die auf der Werkzeugmaschine bearbeitet werden. Während der Bearbeitung ist das Werkstück 19 in einer Spanneinrichtung 26 so aufgenommen, dass es mit den Werkzeugen 17, 18 der Revolverköpfe 13, 14 bearbeitet werden kann.

In der Stellung gemäß Fig. 1 befinden sich die Bearbeitungseinheiten 2, 3 mit Abstand beiderseits des auf der Spanneinrichtung 26 eingespannten Werkstückes 19. Mittels der Schlitten 5, 11; 6, 12 können die Bearbeitungseinheiten 2, 3 an das Werkstück 19 herangefahren und die Revolverköpfe 13, 14 so eingestellt werden, dass mit den entsprechenden Werkzeugen des Revolverkopfes 13, 14 das Werkstück 19 bearbeitet werden kann.

Ist das Werkstück 19 fertig bearbeitet, wird die Bearbeitungseinheit 2 mit dem Schlitten 5 längs der Führung 4 in Z-Richtung in Richtung auf die Spanneinrichtung 26 verfahren. Der Schlitten 11 wird aus Zeitgründen vorteilhaft während dieses Verfahrens so weit in Y-Richtung nach oben verfahren, dass die Greifereinheit 22 das fertig bearbeitete Werkstück 19 erfassen und aus der Spanneinrichtung 26 herausheben kann.

Der Schlitten 11 kann auch vor dem Verfahren nach oben verstellt und erst anschließend der Schlitten 5 verfahren werden.

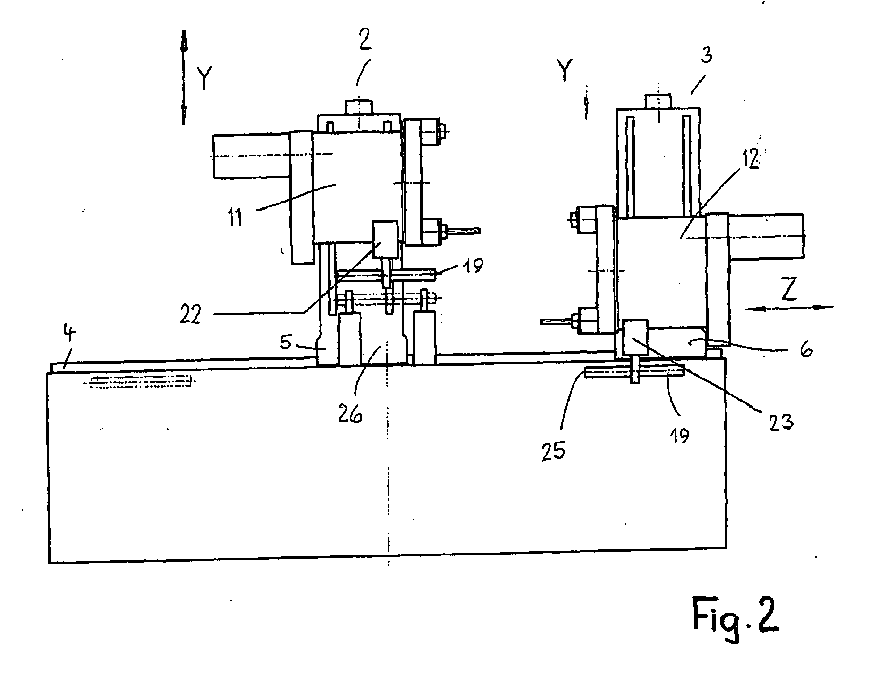

Gleichzeitig wird die Bearbeitungseinheit 3 mit dem Schlitten 6 längs der Führung 4 in Z-Richtung in Richtung auf die Transporteinrichtung 25 verfahren, mit der die zu bearbeitenden Werkstücke 19 der Werkzeugmaschine zugeführt werden. Vorteilhaft während des Verfahrens in Z-Richtung wird der Schlitten 12 in Y-Richtung so weit nach unten gefahren, dass die Greifereinheit 23 das entsprechende Werkstück 19 von der Transporteinrichtung 25 aufnehmen kann. Der Schlitten 12 kann auch nach dem Verfahren des Schlittens 6 nach unten verstellt werden. Fig. 2 zeigt den Zustand, bei dem die Greifereinheit 22 das fertig bearbeitete Werkstück 19 aus der Spanneinrichtung 26 herausgehoben hat, während die Greifereinheit 23 das auf der Transporteinrichtung 25 liegende, noch zu bearbeitende Werkstück 19 erfasst hat.

Nunmehr werden beide Bearbeitungseinheiten 2, 3 vorzugsweise gleichzeitig längs der Führung 4 in Z-Richtung verfahren. Die Bearbeitungseinheit 2 wird in Richtung auf die Transporteinrichtung 24 verfahren, wobei vorteilhaft während des Verfahrens der Schlitten 11 in Y-Richtung so weit abgesenkt wird, dass die Greifereinheit 22 das fertig bearbeitete Werkstück 19 auf der Transporteinrichtung 24 ablegen kann.

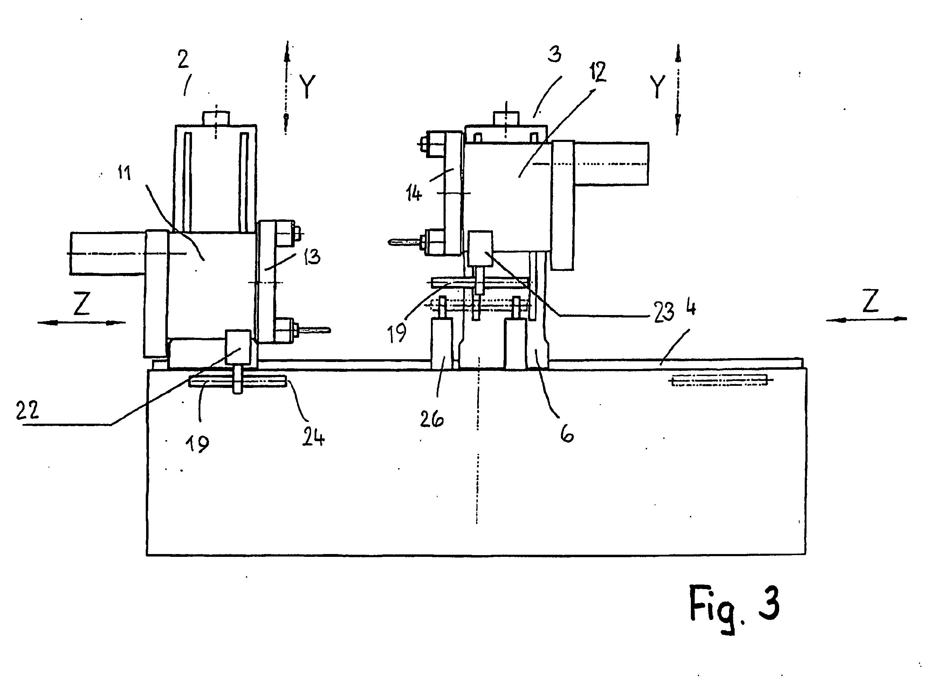

Mit der Bearbeitungseinheit 3 wird das zu bearbeitende Werkstück 19 zur Spanneinrichtung 26 transportiert. Der Schlitten 12 wird in Y-Richtung nach oben gefahren. Die Greifereinheit 23 mit dem Werkstück 19 wird entsprechend angehoben. Sobald sich das Werkstück 19 im Bereich oberhalb der Spanneinrichtung 26 befindet (Fig. 3), wird der Schlitten 6 angehalten und der Schlitten 12 in Y-Richtung so weit abgesenkt, dass das Werkstück 19 von der Spanneinrichtung 26 übernommen werden kann. Sobald das Werkstück 19 eingespannt ist, wird die Greifereinheit 23 geöffnet und der Schlitten 12 wieder zurückgefahren.

Anschließend kann das in der Spanneinrichtung 26 befindliche Werkstück 19 bearbeitet werden.

Die beschriebenen Bewegungen der Schlitten 5, 11; 6, 12 der Bearbeitungseinheiten 2, 3 erfolgen vorteilhaft gleichzeitig, so dass ein Austausch der Werkstücke 19 innerhalb kürzester Zeit möglich ist. Zu den kurzen Nebenzeiten trägt bei, dass die Greifereinheiten 22, 23 nicht am Revolverkopf 13, 14, sondern am Schlitten 11, 12 befestigt sind. Dadurch kann der jeweilige Revolverkopf 13, 14 bereits während des Verfahrens in Z-Richtung in die für die nachfolgende Bearbeitungsoperation notwendige Lage gedreht werden. Sobald das Werkstück 19 in die Spanneinrichtung 26 eingespannt ist, kann sofort mit dessen Bearbeitung begonnen werden.

Die Spanneinrichtung 26 befindet sich seitlich neben der Führung 4, so dass die Schlitten 5, 6 seitlich neben die Spanneinrichtung 26 gefahren werden können.

Die Revolverköpfe 13, 14 der beiden Bearbeitungseinheiten 2, 3 sind im Ausführungsbeispiel in zwei zueinander senkrechten Richtungen (Y- und Z-Richtung) verfahrbar. Die Werkzeugmaschine kann aber auch so ausgebildet werden, dass die Bearbeitungseinheiten 2, 3 auch in X-Richtung auf dem Maschinenbett verfahrbar sind. Dadurch lassen sich die Revolverköpfe 13, 14 in drei zueinander senkrechten Richtungen einstellen, so dass eine optimale Bearbeitung der Werkstücke 19 möglich ist.

## Patentansprüche

1. Werkzeugmaschine mit mindestens einer Spanneinrichtung (26) für zu bearbeitende Werkstücke (19) und mit wenigstens zwei Bearbeitungseinheiten (2, 3), die beiderseits der Spanneinrichtung (26) angeordnet sind und jeweils wenigstens ein Werkzeug (17, 18) und jeweils wenigstens eine Greifereinheit (22, 23) aufweisen,
**dadurch gekennzeichnet, dass** die jeweilige Greifereinheit (22, 23) unmittelbar an jeweils inem mit dem Werkzeug versehenen Schlitten (11, 12) vorgesehen
ist, und dass die Greifereinheit (22, 23) unter Ausnutzung ausschließlich der Schlittenachsen (Y, Z) die Werkstücke (19) ein- und auswechselt sowie nach der Bearbeitung ablegt.

2. Werkzeugmaschine nach Anspruch 1,
**dadurch gekennzeichnet, dass** die Werkzeuge um eine horizontale Achse (15, 16) drehbar sind.

3. Werkzeugmaschine nach Anspruch 1 oder 2,
**dadurch gekennzeichnet, dass** die Werkzeuge bzw. die Werkzeugspindein in Richtung ihrer Drehachse (15, 16) verfahrbar sind (Z-Richtung).

4. Werkzeugmaschine nach Anspruch 3,
**dadurch gekennzeichnet, dass** die Werkzeugspindeln quer zu ihrer Drehachse (15, 16) verfahrbar sind.

5. Werkzeugmaschine nach einem der Ansprüche 1 bis 4,
**dadurch gekennzeichnet, dass** die Bearbeitungseinheiten (2, 3) mittels eines weiteren Schlittens (5, 6) in Richtung der Drehachse (15, 16) der Werkzeugspindeln verfahrbar sind.

6. Werkzeugmaschine nach einem der Ansprüche 1 bis 5,
**dadurch gekennzeichnet, dass** wenigstens die eine, vorzugsweise beide Bearbeitungseinheiten (2, 3) einen Werkzeugrevolver (13, 14) aufweist.

7. Verfahren zum Be- und Entladen von Werkstücken in einer Werkzeugmaschine nach einem der Ansprüche 1 bis 6, bei dem die Werkstücke zunächst in die Spanneinrichtung eingesetzt und nach der Bearbeitung der Spanneinrichtung entnommen werden und bei dem etwa zeitparallel das in der Spanneinrichtung (26) bearbeitete Werkstück (19) von der einen Bearbeitungseinheit (2) entfernt und ein zu bearbeitendes Werkstück (19) von der anderen Bearbeitungseinheit (3) an die Spanneinrichtung (26) herangeführt wird,
**dadurch gekennzeichnet, dass** das zu bearbeitende und das bearbeitete Werkstück (19) ausschließlich durch Verfahren der Schlitten (5, 11; 6, 12) in Richtung der Schlittenachsen (Y, Z) von der Greifereinheit (22, 23) aufgenommen bzw. abgelegt wird.

8. Verfahren nach Anspruch 7,
**dadurch gekennzeichnet, dass** der einen Bearbeitungseinheit (2) mindestens eine zum Abtransport der bearbeiteten Werkstücke (19) dienende Transporteinrichtung (24) zugeordnet ist.

9. Verfahren nach Anspruch 7 oder 8,
**dadurch gekennzeichnet, dass** der anderen Bearbeitungseinheit (3) mindestens eine zur Zuführung noch zu bearbeitender Werkstücke (19) dienende Transporteinrichtung (25) zugeordnet ist.

10. Verfahren nach einem der Ansprüche 7 bis 9,
**dadurch gekennzeichnet, dass** zumindest der eine Werkzeugrevolver (13, 14) während des Transports des Werkstückes (19) in seine Arbeitslage zum anschließenden Bearbeiten des Werkstückes (19) gedreht wird.

## Claims

1. A machine tool having at least one clamping device (26) for workpieces (19) to be machined and having at least two machining units (2, 3) which are arranged at either side of the clamping device (26) and which have at least one tool (17, 18) each and at least one gripper unit (22, 23) each, **characterised in that** in each case the gripper unit (22, 23) is provided directly on a respective carriage (11, 12) provided with the tool, and **in that** using solely the carriage axes (Y, Z), the gripper unit (22, 23) swaps in and swaps out the workpieces (19) and also deposits them after the machining.

2. A machine tool according to claim 1, **characterised in that** the tools are rotatable about a horizontal axis (15, 16).

3. A machine tool according to claim 1 or 2, **characterised in that** the tools or the tool spindles are movable in the direction of their rotational axis (15, 16) (Z-direction).

4. A machine tool according to claim 3, **characterised in that** the tool spindles are movable transversely to their rotational axis (15, 16).

5. A machine tool according to any one of claims 1 to 4, **characterised in that** the machining units (2, 3) are movable in the direction of the rotational axis (15, 16) of the tool spindles by means of another carriage (5, 6).

6. A machine tool according to any one of claims 1 to 5, **characterised in that** at least one, preferably both, machining units (2, 3) have a tool turret (13, 14).

7. A method for the loading and unloading of workpieces in a machine tool according to any one of claims 1 to 6, in which the workpieces are first of all inserted into the clamping device and after machining are removed from the clamping device and in which in a substantially simultaneous manner the workpiece (19) machined in the clamping device (26) is removed by one machining unit (2) and a workpiece (19) to be machined is advanced to the clamping device (26) by the other machining unit (3), **characterised in that** the workpieces (19) which are to be machined and which have been machined are received and deposited respectively by the gripper unit (22, 23) solely though movement of the carriages (5, 11; 6, 12) in the direction of the carriage axes (Y, Z).

8. A method according to claim 7, **characterised in that** at least one transport device (24) serving to transport away the machined workpieces (19) is associated with one machining unit (2).

9. A method according to claim 7 or 8, **characterised in that** at least one transport device (25) serving to feed workpieces (19) still to be machined is associated with the other machining unit (3).

10. A method according to any one of claims 7 to 9, **characterised in that** during transportation of the workpiece (19), at least one of the tool turrets (13, 14) is rotated into its operative position for the subsequent machining of the workpiece (19).

## Revendications

1. Machine-outil comprenant au moins un dispositif de serrage (26) pour des pièces d'oeuvre (19) à usiner, et comprenant au moins deux unités d'usinage (2, 3) qui sont agencées de part et d'autre du dispositif de serrage (26) et présentent respectivement chacune au moins un outil (17, 18) et chacune au moins une unité de préhension (22, 23),
**caractérisée en ce que** l'unité de préhension respective (22, 23) est prévue directement sur un chariot respectif (11, 12) muni de l'outil, et **en ce que** l'unité de préhension (22, 23) assure, en utilisant exclusivement les axes de chariot (Y, Z), l'amenée et le changement des pièces d'oeuvre (19), ainsi que la dépose après l'usinage.

2. Machine-outil selon la revendication 1,
**caractérisée en ce que** les outils peuvent tourner autour d'un axe horizontal (15, 16).

3. Machine-outil selon la revendication 1 ou la revendication 2,
**caractérisée en ce que** les outils ou les broches porte-outils peuvent être déplacés dans la direction de leur axe de rotation (15, 16) (direction Z).

4. Machine-outil selon la revendication 3,
**caractérisée en ce que** les broches porte-outils peuvent être déplacées transversalement à leur axe de rotation (15, 16).

5. Machine-outil selon l'une des revendications 1 à 4,
**caractérisée en ce que** les unités d'usinage (2, 3) peuvent être déplacées, au moyen d'un autre chariot (5, 6), dans la direction de l'axe de rotation (15, 16) des broches porte-outils.

6. Machine-outil selon l'une des revendications 1 à 5,
**caractérisée en ce que** l'une au moins, de préférence les deux unités d'usinage (2, 3), présentent une tourelle révolver porte-outils (13, 14).

7. Procédé pour le chargement et le déchargement de pièces d'oeuvre dans une machine-outil selon l'une des revendications 1 à 6, selon lequel les pièces d'oeuvre sont tout d'abord introduites dans le dispositif de serrage et sont retirées du dispositif de serrage après l'usinage, et selon lequel, de manière sensiblement en parallèle dans le temps, la pièce d'oeuvre (19) usinée dans le dispositif de serrage (26) est éloignée d'une unité d'usinage (2), et une pièce d'oeuvre (19) à usiner est amenée par l'autre unité d'usinage (3) au dispositif de serrage (26),
**caractérisé en ce que** la pièce d'oeuvre (19) à usiner et celle usinée est prélevée et respectivement déposée par l'unité de préhension (22, 23), exclusivement par déplacement des chariots (5, 11 ; 6, 12) dans la direction des axes de chariots (Y, Z).

8. Procédé selon la revendication 7,
**caractérisé en ce qu'**à une unité d'usinage (2) est associé au moins un dispositif de transport (24) servant à l'évacuation des pièces d'oeuvre (19) usinées.

9. Procédé selon la revendication 7 ou la revendication 8,
**caractérisé en ce qu'**à l'autre unité d'usinage (3) est associé au moins un dispositif de transport (25) servant à l'amenée de pièces d'oeuvre (19) encore à usiner.

10. Procédé selon l'une des revendications 7 à 9,
**caractérisé en ce que** pendant le transport de la pièce d'oeuvre (19) dans sa position de travail, on fait tourner au moins une tourelle révolver porte-outils (13, 14) pour l'usinage, qui va suivre, de la pièce d'oeuvre (19).
